Europäisches Patentamt

European Patent Office

Office européen des brevets

(11) Veröffentlichungsnummer: **0 209 027 B1**

# (12) EUROPÄISCHE PATENTSCHRIFT

(45) Veröffentlichungstag der Patentschrift: **01.04.92**

(21) Anmeldenummer: **86109200.5**

(22) Anmeldetag: **05.07.86**

(51) Int. Cl.⁵: **H02B 7/06, E04H 5/04**

(54) **Transportable Umspannstation.**

(30) Priorität: **06.07.85 DE 8519621 U**

(43) Veröffentlichungstag der Anmeldung:
**21.01.87 Patentblatt 87/04**

(45) Bekanntmachung des Hinweises auf die
Patenterteilung:
**01.04.92 Patentblatt 92/14**

(84) Benannte Vertragsstaaten:
**AT BE CH DE FR IT LI NL**

(56) Entgegenhaltungen:
**AT-A- 336 226**
**DE-A- 2 311 724**
**DE-A- 2 401 531**
**DE-A- 2 401 532**

(73) Patentinhaber: **Betonbau GmbH**
**Schwetzinger Strasse 22-26**
**W-6833 Waghäusel(DE)**

(72) Erfinder: **Kaute, Christoph**
**Guntherstrasse 9**
**W-7500 Karlsruhe(DE)**
Erfinder: **Primus, Illo-Frank, Dr.-Ing.**
**Im Rennich 10**
**W-7500 Karlsruhe 41(DE)**

(74) Vertreter: **Hiebsch, Gerhard F., Dipl.-Ing.**
**Hiebsch & Peege Patentanwälte Postfach464**
**Erzbergerstrasse 5a**
**W-7700 Singen 1(DE)**

## Beschreibung

Die Erfindung betrifft eine transportable Umspannstation nach dem Oberbegriff des Patentanspruches 1.

Das Störfallrisiko ist bei Umspannstationen in letzter Zeit bedeutend geringer geworden, da die in derartigen Stationen eingesetzten Aggregate und Geräte sicherer geworden sind. Deshalb werden Umspannstationen immer häufiger auch in dicht besiedelten Gebieten aufgestellt. Dort fehlt aber meist der für Hochbauten erforderliche Platzbedarf; zum anderen stören derartige technische Zweckbauten vielfach das ästhetische Bild.

Man ist deshalb dazu übergegangen, die Stationsgebäude soweit wie irgend möglich und zulässig zu verkleinern und sie ganz oder teilweise in das Erdreich zu versenken. Die Abmessungen des Stationsinneren werden bestimmt durch die Größe der Aggregate, ihre Zuordnung zueinander und den für ihre Bedienung und Wartung erforderlichen Raum.

Aus der DE-A-24 01 532 ist eine Umspannstation nach dem Oberbegriff des Patentanspruches 1 bekannt. Sie zeigt eine transportable Umspannstation in Niedrigbauweise, die teilweise in das Erdreich eingesenkt ist. Der Einstieg in die Station erfolgt von oben über eine Schwenkleiter nach Hochklappen von zwei mittig an einem U-Träger angelenkten Dachelementen. Der Raum innerhalb der Umspannstation, der dann der Bedienungsmannschaft zur Wartung od.dgl. zur Verfügung steht, ist mehrere Stufen tief unter dem Erdniveau erreichbar und so beengt, daß ein Arbeiten nur schwer vorstellbar ist, wenn man die Fig. 1, 2 und 3 dieser Schrift vergleicht.

Der Erfindung liegt deshalb die Aufgabe zugrunde, eine transportable Umspannstation der eingangs genannten Art so zu konzipieren, daß sie bei extrem geringen Abmessungen trotz Niedrigbauweise bedienungsfreundlich ist und eine Aufstellung auch bei beengten Platzverhältnissen, insbesondere bei nur einseitiger Zugänglichkeit, erlaubt.

Diese Aufgabe wird erfindungsgemäß durch die kennzeichnenden Merkmale des Anspruches 1 gelöst.

Besondere Weiterbildungen der Erfindung sind in den Unteransprüchen angegeben.

Durch die Teilung der Abdeckung des Gehäuses mit der Anordnung aufklappbaren vorderen Teilabdeckung über dem bedienungsintensiven Schaltraum im vorderen Teil des Stationsgebäudes und einer Restabdeckung über dem im hinteren Raum angeordneten Transformator, die gegebenenfalls arretierbar und im entarretierten Zustand abnehmbar ist, ist eine Konzeption gelungen, bei der die Station nur von der Vorderfront aus bedient zu werden braucht und bei der Öffnung der Teilabdeckung zu Bedienungs- und Wartungszwecken nur der Raum vor bzw. in der Station im wesentlichen über dem Erdniveau, beansprucht wird. Die nach oben wegklappbare Teilabdeckung gibt den Zugang frei und bietet gleichzeitig einen Schutz gegen Witterungseinflüsse während der Bedienungs- und Wartungsarbeiten. Die Bedienung und Wartung der Aggregate kann in bequemer Weise von außen von der Vorderfront des Stationsgebäudes aus erfolgen.

Durch die Anordnung eines Bedienungsraumes, insbesondere im vorderen Teil des Gehäuses der Station, ist in einer Weiterbildung für das Bedienungspersonal Platz für notwendige Aufsichts-, Bedienungs- und Reparaturarbeiten oder für das Anschließen der Station an das Netz Raum für die Kabelmontage und zur Ausbildung der erforderlichen Kabelradien gegeben. Da die im Bedienungsraum vorgesehenen begehbaren Zwischenbodenplatten abdeckbar sind, vergrößern sie den Montageraum.

Diese Zwischenbodenplatten, die in der Höhe verstellbar angeordnet und auf die jeweilige Anlagenkonzeption angepaßt werden können, also eine Teilung des Raumes in der Höhe ermöglichen, sind zweckmäßigerweise mittel- und niederspannungsseitig auf getrennten Unterkonstruktionen oder an der Frontwand befestigten Konsolen aufgelegt. Beim Schalten und Warten der Umspannstation betritt der Bedienungsfachmann die Station vom Gehweg oder vom Zugang aus, in dem er sich auf die Zwischenbodenplatte stellt. Es handelt sich somit bei dieser Ausführung um die erste begehbare Tiefstation.

Eine andere Möglichkeit, den Bedienungs- und Montageraum für die Kabelanschlußarbeiten zu erweitern, besteht darin, an der Vorderfront des Stationsgebäudes einen begehbaren Zuluftschacht vorzusehen.

Zur Erleichterung beim Auswechseln der Mittelspannungsschaltfelder und der Niederspannungsverteilung besteht die Vorderwand des Stationsgebäudes in diesem Falle zweckmäßigerweise aus abmontierbaren Frontplatten.

Besondere Weiterbildungen der Erfindung sind den übrigen Unteransprüchen zu entnehmen.

Aus der DE-A-24 01 531 ist schließlich noch eine in das Erdreich absenkbare Mittelspannungsnetzstation aus Betonfertigteilen in Niedrigbauweise bekannt, die keine klappbare Abdeckung hat, von oben her gewartet werden soll und soweit wie möglich im Erdreich versenkt werden soll. Das Betongehäuse besteht aus einem, vorzugsweise monolythischen Unterteil mit einem nach oben offenen kastenförmigen Teil, der zur Unterbringung des Transformators und als Ölauffangwanne ausgebildet ist, dem auf der Längsseite eine Kammer für das Gehäuse der Mittelspannungsgeräte samt deren Verbindungen und auf der Schmalseite eine Kammer für das Gehäuse der Niederspannungsverteilung vorgesetzt ist, und dem an vier begrenzten Flächen an den Eckpunkten ein Dachelement aus Stahlbeton aufgesetzt ist, wobei jeder Kammer im Kabelteil Schachtabdeckplatten aus Beton oder Kunststoff vorgesetzt sind.

Weitere Einzelheiten und zweckmäßige Weiterbildungen der Erfindung werden nachfolgend im Zusammenhang mit in der Zeichnung dargestellten Ausführungsbeispielen der Erfindung dargestellt und erläutert.

Es zeigen:

Figur 1:     eine teilweise in das Erdreich eingesenkte Kleinstation mit aufgeklappter Teilabdeckung im vertikalen Schnitt;

Figur 2:     die Kleinstation gemäß Figur 1 mit abgenommener Abdeckung in der Draufsicht;

Figur 3:     die Seitenansicht eines zweiten Ausführungsbeispieles einer Umspannstation;

Figur 4:     ein drittes Ausführungsbeispiel einer Umspannstation mit Blechwänden in der Draufsicht;

Figur 5:     eine Teildarstellung der Abdeckung über dem Trafo im vertikalen Schnitt;

Figur 6:     eine Teildarstellung der zugeklappten Teilabdeckung über den Mittelspannungsschaltfeldern und der Niederspannungsverteilung im vertikalen Schnitt;

Figur 7:     eine Seitenansicht der geschlossenen Kleinstation gemäß Figur 1;

Figur 8:     eine Seitenansicht eines weiteren Ausführungsbeispieles einer geschlossenen Kleinstation;

Figur 9:     eine Seitenansicht eines weiteren Ausführungsbeispieles einer Umspannstation und

Figur 10:     eine Seitenansicht eines weiteren Ausführungsbeispieles einer Umspannstation mit geöffneter Teilabdeckung.

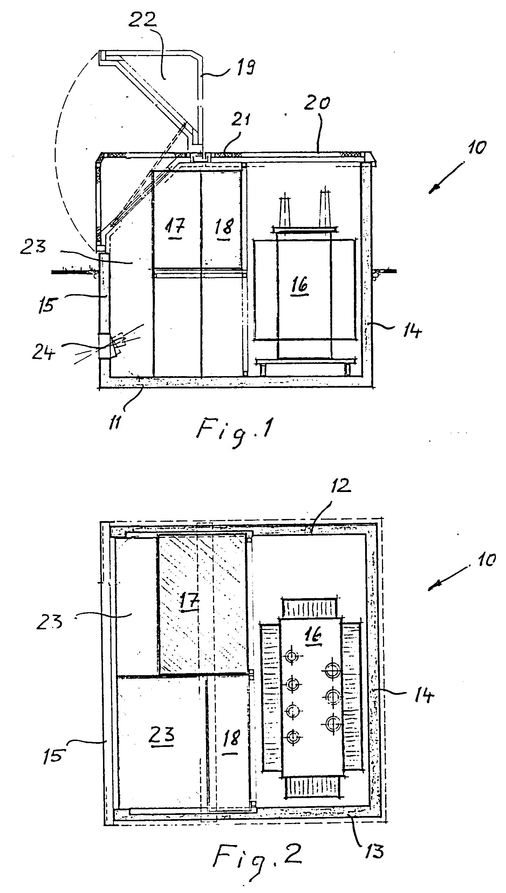

Die Kleinstation gemäß Figur 1 und 2 weist ein Betongehäuse 10 aus einer Bodenplatte 11 auf, die monolithisch mit den Seitenwänden 12 und 13, der hinteren Wand 14 und der nur knapp über das Erdreich hinausragenden vorderen Wand 15 verbunden ist. Im hinteren Bereich des Innenraumes des Gehäuses 10 ist ein Transformator 16 und im vorderen Bereich Mittelspannungsschaltfelder 17 und eine Niederspannungsverteilung 18 angeordnet. Das Gehäuse 10 ist im Bereich der Mittelspannungsschaltfelder 17 und der Niederspannungsverteilung 18 durch eine nach oben aufklappbare Teilabdeckung 19 und im Bereich des Transformators 16 durch eine arretierbare und im entarretierten Zustand abnehmbare Restabdeckung 20 abgedeckt. Der aus der Teilabdeckung 19 und der Restabdeckung 20 bestehende Deckel des Gehäuses 10 und das Gehäuse 10 selbst sind doppelwandig ausgeführt. Zweckmäßigerweise ist der Raum zwischen den beiden Wänden des Deckels mit einem schallabsorbierenden, wärmeisolierenden und Schwitzwasser verhindernden Werkstoff 21 ausgefüllt. Die Teilabdeckung 19 ist winkelförmig ausgebildet, so daß sie einen Teil der Vorderwand 15 des Gehäuses 10 bildet. Dadurch wird die Zugänglichkeit und Bedienungsfreundlichkeit der Mittelspannungsfelder 17 und der Niederspannungsverteilung 18 wesentlich verbessert. Seitlich an der Teilabdeckung 19 sind Schürzen 22 angeformt, so daß die aufgeklappte Teilabdeckung einen vollkommenen Schutz gegen Regen und Schnee bildet. Die Schürzen 22 sind jedoch nicht zwingend erforderlich.

Um die Zugänglichkeit zu den Mittelspannungsschaltfeldern 17 und der Niederspannungsverteilung 18 und den Kabelanschlüssen noch zu erhöhen und insbesondere deren Auswechslung zu erleichtern, kann die Vorderwand 15 des Gehäuses 10 aus abmontierbaren Frontplatten bestehen. Um diese abmontieren zu können, muß das davor lagernde Erdreich entfernt werden. In einer in der Zeichnung nicht dargestellten zweckmäßigen Ausführungsform ist an der Vorderfront des Gehäuses 10 unmittelbar vor der Vorderwand 15 ein vorzugsweise begehbarer Zuluftschacht vorgesehen. Dieser Zuluftschacht erspart die Wegräumung des Erdreiches, wenn die Demontage der Frontplatten der Vorderwand 15 gewünscht wird, er verbessert außerdem die Belüftungsmöglichkeiten des Stationsinneren und er kann schließlich dem Montage- und Bedienungspersonal als zusätzlicher Aufenthaltsraum bzw. Arbeitsraum bei der Bedienung oder Montage der im vorderen Raumteil des Gehäuses 10 angeordneten fabrikfertigen Mittelspannungsschaltfelder 17, der Niederspannungsverteilung 18 und der Kabelendanschlüsse dienen.

Derartige Bedienungsräume können aber, wenn das Platzangebot es erlaubt, auch innerhalb des Gehäuses 10 vor der Niederspannungsverteilung 18 und/oder den Mittelspannungsschaltfeldern 17 vorgesehen werden. Im Ausführungsbeispiel gemäß Figur 1 und 2 ist ein derartiger Bedienungsraum 23 vor der Niederspannungsverteilung 18 und vor den Mittelspannungsschaltfeldern 17 vorhanden. Zweckmäßigerweise ist vor den Mittelspannungsfeldern 17 und/oder vor der Niederspannungsverteilung 18 ein Vorraum zur Montage der bei 24 eingeführten Kabel und zur Ausbildung der erforderlichen Kabelradien vorgesehen.

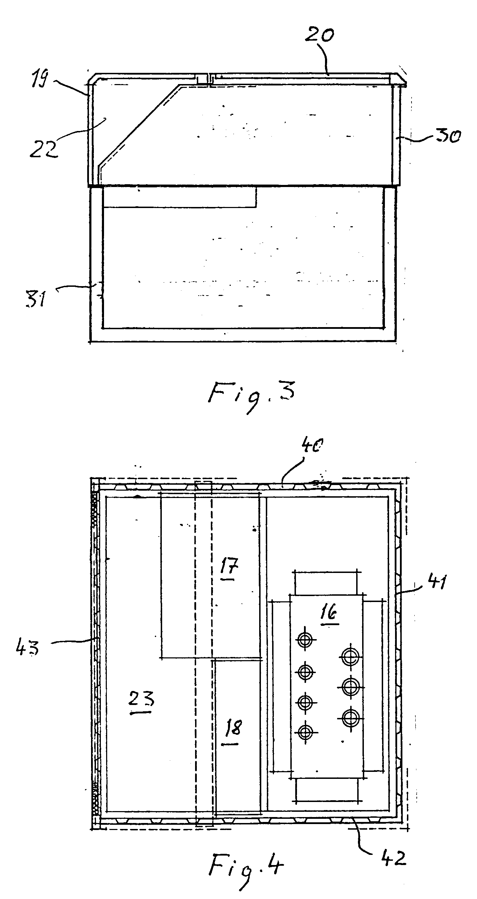

Bei dem Ausführungsbeispiel gemäß Figur. 3 ist das Gehäuse 10 etwa in mittlerer Höhe waagerecht in ein Oberteil 30 und ein Unterteil 31 geteilt. Das Unterteil 31 ist als monolithisch hergestellte Betonwanne ausgebildet und dient als Ölwanne und Auflage für den Transformator 16 und als Kabelkeller. Die Fuge zwischen dem Ober- und Unterteil 30 bzw. 31 ist wasserdicht verschlossen. In das Oberteil 30 lassen sich bereits im Werk die Mittelspannungsfelder 17 und die Niederspannungsverteilungen 18 einmontieren.

In einer zweckmäßigen Ausführungsform kann das Gehäuse 10 in weitere Teilgehäuse unterteilt sein: ein erstes Teilgehäuse für die Mittelspannungsschaltfelder 17, ein zweites Teilgehäuse für die Niederspannungsverteilung 18 und ein weiteres Teilgehäuse für den Transformator 16. Je zwei Teilgehäuse können zu einem einheitlichen Gehäuse zusammengefaßt sein.

Bei dem Ausführungsbeispiel gemäß Figur 4 sind die Wände 40 bis 43 des Gehäuses aus einwandigen, trapezförmig ausgebildeten, untereinander verschweißten und feuerverzinkten Stahlblechen hergestellt. Anstelle der trapezförmigen Ausbildung der Wände können bei kleineren Gehäusen 10 auch Sicken zur Versteifung der Wände vorgesehen werden.

In Figur 5 ist die Restabdeckung 20 über dem Transformator 16 in einer Teildarstellung in vergrößertem Maßstab wiedergegeben. Diese Darstellung zeigt die Be- und Entlüftung des Stationsinneren über Lochblechanordnungen 32 zwischen dem Oberteil 30 und dem Unterteil 31 des Gehäuses 10 bzw. ein rechtwinklig gebogenes Lochblech 33, das die Unterkante des äußeren Randbereiches der Restabdeckung 20 bildet und auf dem oberen Rand des Oberteiles 30 des Gehäuses 10 aufliegt. Die Kombination der Lochbleche 32 und 33 in dieser Anordnung gewährt eine hervorragende Luftzirkulation im Stationsinneren. Wie die Abdeckung 20 über dem Transformator 16 kann auch die aufklappbare Teilabdeckung 19 ausgebildet sein.

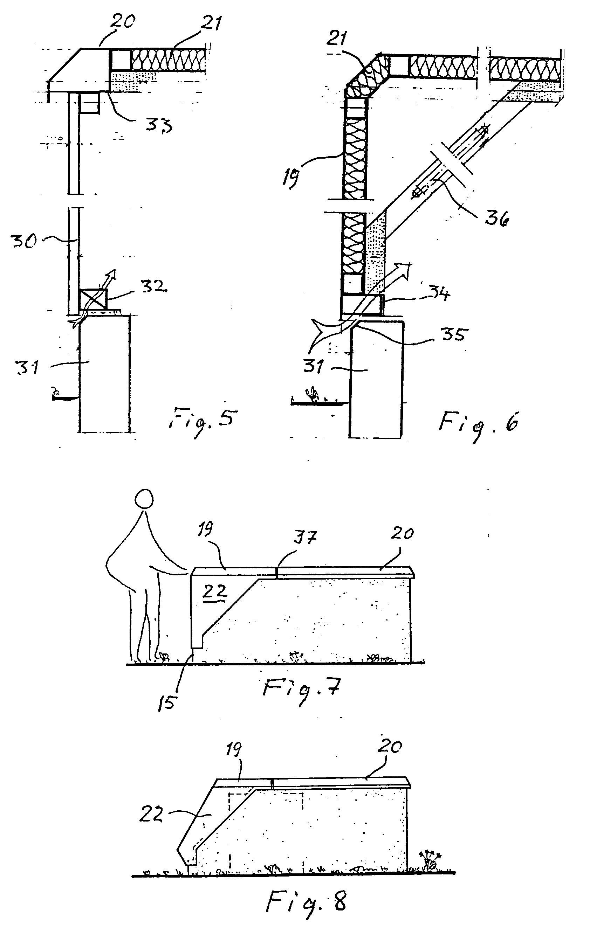

Eine andere Ausgestaltung der Belüftungsvorrichtung zwischen Unterteil 31 des Gehäuses 10 und der abgewinkelten Teilabdeckung 19 zeigt Figur 6. Die Teilabdeckung 19 liegt im geschlossenen Zustand an einer Rohrschiene 34 an, die aus einem Lochblech gebogen ist und ein rechteckförmiges Profil aufweist. Eine Abschrägung 35 an der nach außen weisenden Oberkante des Unterteiles 31 begünstigt - wie im Ausführungsbeispiel gemäß Figur 5 - den Luftzutritt. Eine zwischen dem feststehenden Teil des Stationsoberteiles und der Teilabdeckung 19 angeordnete Gasdruckfeder 36 unterstützt und erleichtert das Öffnen der Teilabdeckung. Aus Sicherheitsgründen ist die Teilabdeckung 19 im geöffneten Zustand durch in der Zeichnung nicht dargestellte Feststeller arretierbar. Schließlich erscheint es zweckmäßig, die Teilabdeckung 19 im geschlossenen Zustand verriegeln zu können. Die Verriegelung erfolgt vorzugsweise an drei Punkten, und zwar in der Mitte und jeweils im seitlichen Bereich der Teilabdeckung, wobei die drei Verriegelungen durch ein einziges Schloß betätigt werden können.

Die Seitenansicht der Umspannstation gemäß Figur 7 entspricht den Ausführungsbeispielen gemäß Figur 1 bis 3. Die Teilabdeckung 19 ist - wie bereits beschrieben - rechtwinklig abgebogen, bildet einen Teil der Vorderwand 15 und weist seitliche Schürzen 22 auf. Die Naht 37 zwischen der Teilabdeckung 19 und der Restabdeckung 20 ist wasserdicht verschlossen.

Um ein Sitzen auf der Teilabdeckung 20 zu erschweren und aus ästhetischen Gründen ist beim Ausführungsbeispiel gemäß Figur 8 die Teilabdeckung 19 zweimal abgewinkelt. Die Abwinklung hat zudem den Vorteil, daß die seitlichen Schürzen 22 flächenmäßig kleiner und dadurch stabiler werden.

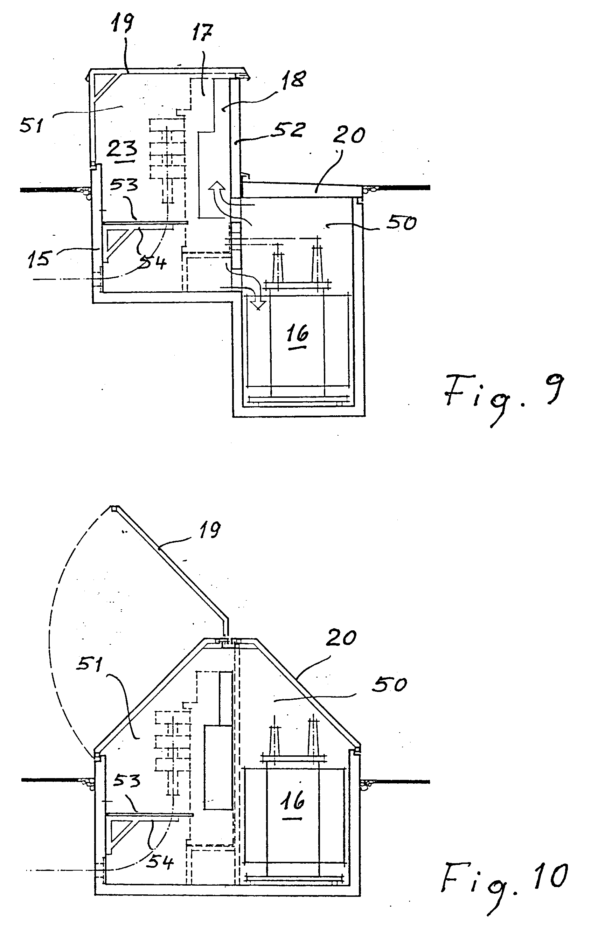

Bei dem Ausführungsbeispiel gemäß Figur 9 ist der Transformatorenraum 50 gegenüber dem Schaltraum 51 so stark in das Erdreich abgesenkt, daß seine Restabdeckung 20, die in diesem Beispiel aus Beton besteht, auf der Höhe des umgebenden Erdreiches liegt. Auch die Rückwand 52 des aus dem Erdreich ragenden Schaltraumes 51 besteht aus Beton. Die Be- und Entlüftung des Transformatorenraumes 50 erfolgt durch Öffnungen in der Trennwand 52 über den Schaltraum 51. Im Bedienungsraum 23 des Schaltraumes 51 ist eine in der Höhe verstellbar angeordnete Zwischenbodenplatte 53 angeordnet, die auf an der Vorderwand 15 befestigten Konsolen 54 aufgelegt ist und aus mehreren Teilstücken besteht. Die Zwischenbodenplatte 53 ist begehbar, so daß ein Bedienungsfachmann sich beim Schalten und Warten der Umschaltstation auf die Platte stellen kann.

Die Schaltstation nach diesem Beispiel wird zweckmäßigerweise überall dort ausgeführt, wo über dem Erdreich für die gesamte Station der Platz nicht in ausreichender Weise zur Verfügung steht, beispielsweise in Vorgärten oder an Begrenzungszäunen. Bei diesem Ausführungsbeispiel weist übrigens die Teilabdeckung 19 über dem Schaltraum 51 keine seitlich angeformten Schürzen auf.

Bei dem Ausführungsbeispiel gemäß Figur 10 ist nicht nur die Teilabdeckung 19 über dem Schaltraum 51 abgewinkelt, sondern auch die Restabdeckung 20 über dem Transformatorenraum 50. Dies hat den Vorteil, daß Raum in unmittelbarer Umgebung des Stationsgebäudes gespart wird und kein Regenwasser auf der Restabdeckung 20 stehenbleiben kann. Die Installation der Umspannstation nach diesem Ausführungsbeispiel entspricht derjenigen der vorbeschriebenen Ausführungsbeispiele.

Bei allen beschriebenen Ausführungsbeispielen wird die Teilabdeckung 19 nach oben aufgeklappt. Dadurch wird die Zugänglichkeit zu den Aggregaten im Stationsinneren erleichtert, kein zusätzlicher Raum vor, neben oder hinter dem Gehäuse 10 beansprucht und auch bei geöffneter Station ein Witterungsschutz gewährleistet.

Das Stationsgebäude kann dreiseitig in einen Hang gestellt werden, insbesondere bei Betonausführung. Es weist wegen seiner kompakten Ausführung einen hohen Objektschutz auf. Wegen seiner geringen Höhe kann es auf einem normalen Lastkraftwagen transportiert werden; wegen des geringen Gesamtgewichtes, sogar im fertig mit Geräten installiertem Zustand. Durch die mögliche waagerechte Teilung des Gehäuses 10 kann auch bei größeren Stationsgebäuden das Gewicht, selbt in Betonausführung, so minimiert werden, daß die zum Transport von Kabeltrommeln vorhandenen Lastkraftwagen mit aufgebautem Ladekran auch zum Transport der Teilgehäuse eingesetzt werden können.

**Patentansprüche**

1. Transportable Umspannstation in Niedrigbauweise, insbesondere teilweise in das Erdreich einsenkbare Kleinstation mit Transformator (16) und Schaltfeldern (17, 18) mit einem Gehäuse (10) mit klappbarer Abdeckung (19), wobei die unter der Abdeckung (19) angebrachten Schaltfelder (17, 18) im vorderen Raum des Gehäuses (10) angeordnet sind, dadurch gekennzeichnet, daß die klappbare Abdeckung als vordere Teilabdeckung (19) ausgebildet ist, daß das Gehäuse (10) über dem hinteren Raumteil eine Restabdeckung (20) aufweist, die bevorzugt arretierbar und im entarretierten Zustand abnehmbar ist, und daß die gesamte Bauhöhe des Gehäuses (10) maximal 1,00 m über Erdreich nicht überschreitet.

2. Umspannstation nach Anspruch 1, dadurch gekennzeichnet, daß die vordere Teilabdeckung (19) winkelförmig ausgebildet ist und einen Teil der Vorderwand (15) des Gehäuses (10) bildet.

3. Umspannstation nach Anspruch 2, dadurch gekennzeichnet, daß an der vorderen Teilabdeckung (19) seitlich angeformte Schürzen (22) vorgesehen sind.

4. Umspannstation nach einem der Ansprüche 1 bis 3, dadurch gekennzeichnet, daß innerhalb des Gehäuses (10), insbesondere in seinem vorderen Teil, ein Bedienungsraum (23) und/oder ein Vorraum mit in der Höhe verstellbar anordenbaren Zwischenbodenplatten (53) vorgesehen ist, die bevorzugt auf an der Vorderwand (15) des Gehäuses (10) arretierten Konsolen (54) aufgelegt sind und aus mehreren Teilstücken bestehen, die begehbar und abdeckbar sind.

5. Umspannstation nach einem der Ansprüche 1 bis 4, dadurch gekennzeichnet, daß die Teilabdeckung (19) aus zwei abgewinkelten Teilstükken besteht.

6. Umspannstation nach Anspruch 5, dadurch gekennzeichnet, daß die Teilung der Teilabdekkung (19) an der Nahtstelle von deren beiden Schenkeln erfolgt und die Nähte wasserdicht verschlossen sind.

7. Umspannstation nach wenigstens einem der Ansprüche 1 bis 6, dadurch gekennzeichnet, daß die vordere Teilabdeckung (19) in ihrem vorderen Bereich zweimal abgewinkelt ist.

8. Umspannstation nach wenigstens einem der Ansprüche 1 bis 7, dadurch gekennzeichnet, daß die Restabdeckung (20) ein- oder zweimal abgewinkelt ist.

9. Umspannstation nach wenigstens einem der Ansprüche 1 bis 8, dadurch gekennzeichnet, daß die vordere Teilabdeckung (19) nach oben wegklappbar ist.

10. Umspannstation nach wenigstens einem der vorhergehenden Ansprüche, dadurch gekennzeichnet, daß die vordere Teilabdeckung (19) und die Restabdeckung (20) doppelwandig ausgeführt sind sowie der Raum zwischen den beiden Wänden der Abdeckung mit einem schallabsorbierenden Werkstoff (21) ausgefüllt ist.

11. Umspannstation nach wenigstens einem der vorhergehenden Ansprüche, dadurch gekennzeichnet, daß das Öffnen der vorderen Teilabdeckung (19) durch seitlich angeordnete Federn, insbesondere Gasdruckfedern (36), unterstützt ist.

12. Umspannstation nach wenigstens einem der vorhergehenden Ansprüche, dadurch gekennzeichnet, daß die vordere Teilabdeckung (19) durch Feststeller arretierbar ist.

13. Umspannstation nach wenigstens einem der vorhergehenden Ansprüche, dadurch gekennzeichnet, daß die vordere Teilabdeckung (19) an drei Punkten, vorzugsweise in der Mitte und jeweils seitlich, verriegelbar ist und die Verriegelung vorzugsweise durch Betätigung eines einzigen Schlosses erfolgt.

14. Umspannstation nach wenigstens einem der vorhergehenden Ansprüche, dadurch gekennzeichnet, daß ein im hinteren Bereich der Umspannstation angeordneter Transformatorraum (50) abgesenkt und die zugehörige Restabdeckung (20) tiefergelegt ist, daß die Trennwand (52) zwischen dem Transformatorraum und einem im vorderen Bereich der Umspannstation liegenden Schaltraum (51), die die Rückwand des aus dem Erdreich ragenden vorderen Stationsteiles bildet, aus wasserundurchlässigem Beton besteht und daß alle Fugen zwischen der Restabdeckung (20) und dem vorderen Stationsgebäude wasserdicht verschlossen sind.

15. Umspannstation nach einem der vorhergehenden Ansprüche, dadurch gekennzeichnet, daß die Be- und Entlüftung des Gebäudeinneren durch stochersichere Schlitze (34, 35) zwischen der vorderen Wand (15, 31) und der vorderen Teilabdeckung (19) und/oder durch eine stochersichere Rundumentlüftung (33) zwischen der Restabdeckung (20) und den Seitenwänden (12, 13) und/oder der hinteren Wand (14, 30) des Gehäuses (10) erfolgt.

16. Umspannstation nach wenigstens einem der vorhergehenden Ansprüche, dadurch gekennzeichnet, daß zur Be- und Entlüftung des Gebäudeinneren Lüftungssteine in den Wänden vorgesehen sind.

17. Umspannstation nach einem der vorhergehenden Ansprüche, dadurch gekennzeichnet, daß das Gehäuse (10) aus Beton, vorzugsweise monolithisch aus einem Guß, hergestellt ist.

18. Umspannstation nach wenigstens einem der Ansprüche 1 bis 16, dadurch gekennzeichnet, daß das Gehäuse (10) aus vorzugsweise einwandigen, gesickten oder trapezförmig ausgebildeten, untereinander verschweißten und feuerverzinkten Stahlblechen hergestellt ist.

19. Umspannstation nach wenigstens einem der vorhergehenden Ansprüche, dadurch gekennzeichnet, daß das Gehäuse (10) etwa in der Mitte waagerecht in ein Ober- und ein Unterteil (30 bzw. 31) geteilt ist, wobei das Oberteil Mittelspannungsschaltfelder (17) und eine Niederspannungsverteilung (18) vorzugsweise vormontiert aufnimmt und das Unterteil die Ölwanne und die Auflage für einen Transformator (16) und einen Kabelkeller bildet, und daß die Fuge zwischen Ober- und Unterteil (30, 31) wasserdicht geschlossen ist.

20. Umspannstation nach wenigstens einem der Ansprüche 1 bis 19, dadurch gekennzeichnet, daß das Gehäuse aus einem ersten Teilgehäuse für Mittelspannungsschaltfelder (17), einem zweiten Teilgehäuse für eine Niederspannungsverteilung (18) und einem weiteren Teilgehäuse für den Transformator (16) zusammengesetzt ist, wobei zwei Teilgehäuse zu einem einheitlichen Gehäuse zusammenfaßbar sind.

21. Umspannstation nach einem der vorhergehenden Ansprüche, dadurch gekennzeichnet, daß an der Vorderfront des Gehäuses (10) ein vorzugsweise begehbarer Zuluftschacht vorgesehen ist.

**Claims**

1. Transportable transformer station of low construction, especially a substation which can be partly sunk into the ground, comprising a transformer (16) and switchgear panels (17, 18) with a housing (10) having a hinged cover (19), the switchgear panels (17, 18) mounted below the cover (19) being arranged in the front chamber of the housing (10), characterised in that the hinged cover is designed as a front partial cover (19), that the housing has a residual cover (20) over the rear chamber portion which can preferably be locked and is removable in the unlocked state, and that the overall height of the housing (10) is a maximum of 1.00 m above the ground.

2. Transformer station according to claim 1, characterised in that the front partial cover (19) is angular and forms part of the front wall (15) of the housing (10).

3. Transformer station according to claim 2, characterised in that aprons (22) are integrally moulded on to the sides of the front partial cover (19).

4. Transformer station according to one of claims 1 to 3, characterised in that an operating chamber (23) and/or an ante-chamber having vertically adjustable intermediate panels (53) are provided within the housing (10), especially in the front part thereof, these preferably being placed on brackets (54) locked on the front wall (15) of the housing (10) and consisting of several parts which are accessible and can be covered.

5. Transformer station according to one of claims 1 to 4, characterised in that the partial cover (19) consists of two angular parts.

6. Transformer station according to claim 5, characterised in that the partial cover (19) is divided at the interface of the two arms thereof and the seams are sealed in a watertight manner.

7. Transformer station according to at least one of claims 1 to 6, characterised in that the front partial cover (19) is bent at an angle twice in its front region.

8. Transformer station according to at least one of claims 1 to 7, characterised in that the residual cover (20) is bent at an angle once or twice.

9. Transformer station according to at least one of claims 1 to 8, characterised in that the front partial cover (19) can be swung away upwards.

10. Transformer station according to at least one of the preceding claims, characterised in that the front partial cover (19) and the residual cover (20) are double-walled and the space between the two walls of the cover is filled with a sound absorbent material (21).

11. Transformer station according to at least one of the preceding claims, characterised in that opening of the front partial cover (19) is promoted by laterally arranged springs, especially gas-pressure springs (36).

12. Transformer station according to at least one of the preceding claims, characterised in that the front partial cover (19) can be locked by means of stays.

13. Transformer station according to at least one of the preceding claims, characterised in that the front partial cover (19) can be locked at three points, preferably in the centre and at either side, and locking is preferably effected by the actuation of one single lock.

14. Transformer station according to at least one of the preceding claims, characterised in that a transformer chamber (50) arranged in the rear region of the transformer station is sunken and the associated residual cover (20) is arranged lower, that the partition (52) between the transformer chamber and a switch room (51) situated in the front region of the transformer station and forming the rear wall of the front part of the station projecting above the ground consists of watertight concrete and that all of the joints between the residual cover (20) and the front station building are sealed in a watertight manner.

15. Transformer station according to one of the preceding claims, characterised in that ventilation of the building interior is effected by means of prodproof slots (34, 35) between the front wall (15, 31) and the front partial cover (19) and/or by means of prodproof all-round ventilation (33) between the residual cover (20) and the side walls (12, 13) and/or the rear wall (14, 30) of the housing (10).

16. Transformer station according to at least one of the preceding claims, characterised in that ventilating blocks are provided in the walls for ventilation of the building interior.

17. Transformer station according to one of the preceding claims, characterised in that the housing (10) is made of concrete, preferably monolithically cast.

18. Transformer station according to at least one of claims 1 to 16, characterised in that the housing (10) is made of preferably single-web, corrugated or trapezoidal hot-galvanized steel sheets welded together.

19. Transformer station according to at least one of the preceding claims, characterised in that the housing (10) is divided horizontally approximately in the centre into an upper part and a lower part (30 and 31), the upper part preferably housing in a pre-assembled manner medium-voltage switchgear panels (17) and a low-voltage distribution unit (18) and the lower part forming the oil sump and the support for a transformer (16) and a cable basement, and that the joints between the upper part and the lower part (30, 31) are sealed in a watertight manner.

20. Transformer station according to at least one of claims 1 to 19, characterised in that the housing is composed of a first partial housing for medium-voltage switchgear panels (17), a second partial housing for a low-voltage distribution unit (18) and a further partial housing for the transformer (16), wherein two partial housings can be joined together to form one single housing.

**21.** Transformer station according to one of the preceding claims, characterised in that a preferably accessible air-inlet duct is provided at the front of the housing (10).

**Revendications**

**1.** Poste de transformation transportable de faible hauteur, en particulier petit poste installable partiellement dans le sol avec transformateur (16) et tableaux de connexion (17, 18), comportant une enveloppe (10) munie d'une couverture pivotante (19), des tableaux de connexion (17, 18) logés sous la couverture (19) étant disposés dans l'espace avant de l'enveloppe (10), caractérisé en ce que la couverture pivotante est réalisée sous forme de partie de couverture avant (19), en ce que l'enveloppe (10) présente au-dessus de la partie arrière de l'espace intérieur une partie de couverture restante (20) qui est de préférence blocable et qui est amovible à l'état débloqué, et en ce que la hauteur totale de l'enveloppe (10) ne dépasse pas de plus de 1,00 m maximum au-dessus du sol.

**2.** Poste de transformation selon la revendication 1, caractérisé en ce que la partie de couverture avant (19) est de forme angulaire et constitue une partie de la paroi avant (15) de l'enveloppe (10).

**3.** Poste de transformation selon la revendication 2, caractérisé en ce que des jupes (22) disposées latéralement sont prévues sur la partie de couverture avant (19).

**4.** Poste de transformation selon l'une des revendications 1 à 3, caractérisé en ce qu'il est prévu, à l'intérieur de l'enveloppe 110), en particulier dans la partie avant de celle-ci, un espace de manoeuvre (23) et/ou un espace d'accès pourvu de plaques de faux plancher (53) que l'on peut disposer de façon réglable en hauteur, qui sont placées de préférence sur des consoles (54) fixées sur la paroi avant (15) de l'enveloppe (10), et qui sont composées de plusieurs tronçons escamotables sur lesquels on peut circuler.

**5.** Poste de transformation selon l'une des revendications 1 à 4, caractérisé en ce que la partie de couverture (19) est composée de deux tronçons coudés.

**6.** Poste de transformation selon la revendication 5, caractérisé en ce que la partie de couverture (19) se sépare à l'endroit du joint de ses deux pans, et en ce que les joints sont obturés de façon étanche à l'eau.

**7.** Poste de transformation selon l'une au moins des revendications 1 à 6, caractérisé en ce que la partie de couverture avant (19) est coudée deux fois dans sa zone avant.

**8.** Poste de transformation selon l'une au moins des revendications 1 à 7, caractérisé en ce que la partie de couverture restante (20) est coudée une ou deux fois.

**9.** Poste de transformation selon l'une au moins des revendications 1 à 8, caractérisé en ce que la partie de couverture avant (19) est pivotante vers le haut.

**10.** Poste de transformation selon l'une au moins des revendications précédentes, caractérisé en ce que la partie de couverture avant (19) et la partie de couverture restante (20) ont une double paroi, et en ce que l'espace existant entre les deux parois de la couverture est rempli d'une matière acoustiquement absorbante (21).

**11.** Poste de transformation selon l'une au moins des revendications précédentes, caractérisé en ce que des ressorts disposés latéralement, en particulier des ressorts à pression de gaz (36), facilitent l'ouverture de la partie de couverture avant (19).

**12.** Poste de transformation selon l'une au moins des revendications précédentes, caractérisé en ce que la partie de couverture avant (19) est bloquable par des butées.

**13.** Poste de transformation selon l'une au moins des revendications précédentes, caractérisé en ce que la partie de couverture avant (19) est verrouillable en trois points, de préférence en son centre et de chaque côté, et en ce que le verrouillage est réalisé de préférence par actionnement d'une seule serrure.

**14.** Poste de transformation selon l'une au moins des revendications précédentes, caractérisé en ce qu'un local (50) du transformateur, disposé dans la zone arrière du poste de transformation, est placé en contrebas et la partie de couverture restante correspondante (20) est abaissée, en ce que la paroi (52) de séparation entre le local du transformateur et un local de distribution (51) se trouvant dans la zone avant du poste de transformation, laquelle paroi de séparation forme la paroi arrière de la partie avant du poste qui sort du sol, est en béton imperméable, et en ce que tous les joints entre la partie de couverture restante (20) et le bâtiment avant du poste sont obturés de façon étanche.

15. Poste de transformation selon l'une des revendications précédentes, caractérisé en ce que l'entrée et la sortie de l'air de ventilation de l'intérieur du bâtiment se font par des grilles inviolables (34, 35) placées entre la paroi avant (15, 31) et la partie de couverture avant (19), et/ou par une aération périphérique inviolable (33) placée entre la partie de couverture restante (20), les parois latérales (12, 13) et/ou la paroi arrière (14, 30) de l'enveloppe (10).

16. Poste de transformation selon l'une au moins des revendications précédentes, caractérisé en ce que des briques d'aération sont prévues dans les parois pour l'entrée et la sortie de l'air de ventilation de l'intérieur du bâtiment.

17. Poste de transformation selon l'une des revendications précédentes, caractérisé en ce que l'enveloppe (10) est réalisée en béton, et est de préférence réalisée de façon monolithique en une seule coulée.

18. Poste de transformation selon l'une au moins des revendications 1 à 16, caractérisé en ce que l'enveloppe (10) est fabriquée à partir de tôles d'acier de préférence à âme simple, bordées ou de forme trapézoïdales, soudées entre elles et galvanisées à chaud.

19. Poste de transformation selon l'une au moins des revendications précédentes, caractérisé en ce que l'enveloppe (10) est divisée horizontalement, pratiquement en son milieu, en une partie supérieure et une partie inférieure (30 et 31), la partie supérieure recevant des tableaux de connexion moyenne tension (17) et un dispositif de distribution basse tension (18), de préférence préassemblé, et la partie inférieure formant le bac à huile et l'assise d'un transformateur (16) ainsi qu'un caniveau à câbles, et en ce que le joint entre les parties supérieure et inférieure (30, 31) est obturé de façon étanche à l'eau.

20. Poste de transformation selon l'une au moins des revendications 1 à 19, caractérisé en ce que l'enveloppe est composée d'une première partie d'enveloppe pour des tableaux de connexion moyenne tension (17), d'une seconde partie d'enveloppe pour un dispositif de distribution basse tension (18), et d'une autre partie d'enveloppe pour le transformateur (16), deux parties d'enveloppe pouvant être réunies pour former une enveloppe d'une seule pièce.

21. Poste de transformation selon l'une des revendications précédentes, caractérisé en ce qu'une cheminée d'aération, sur laquelle on peut, de préférence, circuler, est prévue sur la face avant de l'enveloppe (10).

Fig.1

Fig.2

Fig. 3

Fig. 4

Fig. 5

Fig. 6

Fig. 7

Fig. 8

Fig. 9

Fig. 10